# EUROPÄISCHE PATENTSCHRIFT

(11) **EP 2 895 377 B1**
(45) Veröffentlichungstag und Bekanntmachung des Hinweises auf die Patenterteilung: **23.11.2016**
(21) Anmeldenummer: 13774600.4
(22) Anmeldetag: 11.09.2013
(51) Int. Cl.: B62B 9/10, A47C 1/024, A61G 5/10, A47C 1/032

(54) **SITZ FÜR EINEN SCHIEBEWAGEN, STUHL ODER KINDERWAGEN**
SEAT FOR PUSHCHAIR, CHAIR OR STROLLER
SIÈGE POUR CHARIOT, CHAISE OU POUSSETTE

(30) Priorität: 12.09.2012 DE 102012017978
(43) Veröffentlichungstag der Anmeldung: 22.07.2015
(73) Patentinhaber: Herzog-Lang, Viktor, 75210 Keltern (DE)
(72) Erfinder: Herzog-Lang, Viktor, 75210 Keltern (DE)
(74) Vertreter: Reinhardt, Harry
(86) Internationale Anmeldenummer: PCT/EP2013/002722
(87) Internationale Veröffentlichungsnummer: WO 2014/040726

(56) Entgegenhaltungen:
- DE-A1- 3 618 705
- DE-A1- 10 019 731
- DE-A1- 19 956 573
- DE-A1-102005 029 878
- FR-A1- 2 749 812

## Beschreibung

### Beschreibung

Die Erfindung betrifft einen Sitz für einen Schiebewagen, Stuhl oder Kinderwagen mit einer Sitztiefenverstellung mit den Merkmalen nach dem Oberbegriff des Anspruches 1.

Bekannte derartige Sitze, wie sie beispielsweise bei Kinderwägen oder Stühlen eingesetzt werden, weisen meist in der Höhe verstellbare Fußstützen auf, mit denen der Abstand zwischen einer Vorderkante der Sitzfläche und einer Oberfläche der Fußstütze verändert und damit an die Größe des Kindes oder Benutzers angepasst werden kann. Der Abstand von der Vorderkante der Sitzfläche bis zu einer hinteren an die Rücklehne angrenzenden Kante der Sitzfläche bleibt hingegen meist konstant. Damit kann zwar die Höhe der Fußstütze verändert werden, jedoch nicht der Abstand von den Kniekehlen bis zur Anlage der Rückenlehne am Gesäß des Benutzers angepasst werden. Daher bieten die meisten Sitze keinen adäquaten ergonomischen Sitz für Benutzer unterschiedlicher Größe mit einer angepassten Tiefe der Sitzfläche, was zu Haltungsschäden führen kann und nicht komfortabel ist.

Aus der dem Oberbegriff des Anspruches 1 zugrundeliegenden DE 10 2005 029 878 A1 ist ein Kindersitz mit einer Sitztiefenverstellung bekannt, bei der eine Rückenlehne und Sitzfläche bildende Materialbahn über Umlenkwellen bis zur Fußstütze geführt ist. Bei Verstellung der Fußstütze nach oben wird so flaschenzugartig auch die Sitztiefe verstellt, in dem das Rückenlehne und Sitzfläche bildende Material nach vorne gezogen wird. Die durchgehende Materialbahn kann bedarfsweise Verstärkungselemente aufweisen, um die Form der Rücklehne auszugestalten und somit einen stabileren Sitz bereit zu stellen. Da Sitz und Rückenlehne aus einer Bahn hergestellt sind, ist eine ergonomische Ausgestaltung von Sitz und Rückenlehne schwer zu erreichen.

Aus der DE 43 28 567 C2 ist ein Kinderwagengestell gekannt, bei dem eine Sitztiefengestaltung dadurch ermöglicht wird, dass die Rückenlehne entlang von Lochreihen verstellbar fixiert wird. Dies bereitet beim Zusammenklappen des Gestells aufgrund der durch die Verstellung geänderten Drehwinkel Probleme.

Bei der DE 199 56 573 A1 ist bei einem Schiebewagen oder Stuhl eine mehrteilige Sitzfläche vorgesehen, wobei der vordere Teil der Sitzfläche mit der Fußstütze entlang von Führungen horizontal verstellbar ist. Die Führungen sind dabei so ausgestaltet, dass sie den vollständigen Bewegungsablauf ermöglichen, jedoch auch im unbenutzten Zustand überstehen, was das Handling des Sitzes erschwert.

Ausgehend von diesem Stand der Technik liegt der vorliegenden Erfindung die Aufgabe zugrunde, einen Schiebewagen, Stuhl oder Kinderwagen mit einer leicht verstellbaren, flexiblen Sitztiefenverstellung zu schaffen.

Diese Aufgabe wird durch einen Sitz für einen Schiebewagen, Stuhl oder Kinderwagen mit den Merkmalen des Anspruches 1 gelöst.

Zur Verstellung der Sitztiefe ist ein Rückenlehnenelement vorgesehen, dass als festes Element definierter Länge in den Flaschenzug eingebunden ist. Da die weiteren Umlenkmittel des Flaschenzugs an geeigneten Stellen angeordnet sind, kann über den Flaschenzug die Stellung des Rückenlehnelements im Verhältnis zum Rückenlehnenträger und Sitzteilträger verändert werden. Dabei ist das Rückenlehnenelement so am Sitzteilträger und am Rückenlehnenträger gelagert, dass es problemlos in verschiedene Stellung bis hin zum Zusammenklappen des Sitzes überführt werden kann, ohne dass eine weitere Verstellung erforderlich ist.

Vorzugsweise trägt das vom eigentlichen Rückenlehnenträger gesonderte Rückenlehnenelement gleichzeitig das Umlenkmittel, über das der Flaschenzug zu den Fixierungen hin umgelenkt wird. Dieses Umlenkmittel kann gleichzeitig auch das Führungselement für den Rückenlehnenträger in den Schiebeführungen des Sitzteilträgers sein, so dass sich für das Umlenkmittel einerseits mehrere Funktionen, andererseits aber auch geometrisch bestimmte Verhältnisse ergeben. Zu diesen geometrisch bestimmten Verhältnissen tragen auch die am Sitzteilträger in geometrisch festen Abständen angeordneten Fixierungen sowie gegebenenfalls weiteren Umlenkwellen bei, so dass das Zugelement des Flaschenzugs konstant unter der zur Betätigung erforderlichen Zugspannung gehalten wird.

Vorzugsweise ist der Flaschenzug als doppelter Flaschenzug ausgebildet, so dass sich eine zuverlässige Verstellung des die Führung für den Rückenlehnenträger bildenden Umlenkelements in den Schiebeführungen ergibt, d. h. eine problemlose Vor- und Rückstellung möglich ist.

Weitere Vorteile ergeben sich aus den Unteransprüchen und der nachfolgenden Beschreibung eines bevorzugten Ausführungsbeispiels.

Im Folgenden wird die Erfindung anhand eines in den Figuren dargestellten Ausführungsbeispiels näher erläutert. Es zeigen:
- Fig. 1: eine dreidimensionale Darstellung des Sitzes,
- Fig. 2, 3: Seitendarstellungen des Sitzes mit in vorderster Stellung befindlichem Rückenlehnenelement bzw. Sitztiefenverstellung in aufrechter Stellung und in Liegeposition,
- Fig. 4, 5: eine dreidimensionale, teilweise geschnittene Darstellung des Sitzes mit der Sitztiefenverstellung in hinterer und vorderer Stellung,
- Fig. 6: einen vergrößerten Ausschnitt des Flaschenzugs im Bereich der Schiebeführungen,
- Fig. 7: eine schematische Darstellung der Bandführung des Flaschenzugs.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Die Figuren zeigen einen Sitz für einen Schiebewagen, Stuhl oder Kinderwagen, der zum Beispiel als Transportwagen für Kinder oder Behinderte oder auch als Kinderhochstuhl eingesetzt werden kann. Der bevorzugte Einsatzzweck ist die Verwendung in einem Kinderwagen als Sitzaufsatz. Der Sitz ist dazu lösbar auf einem zeichnerisch nicht dargestellten Fahrgestell befestigt. Die Figuren zeigen dabei im Wesentlichen das nicht gepolsterte Grundgestell, das im Gebrauchszustand mit Stoff und Polsterung überzogen ist.

Der Sitz weist einen Sitzteilträger 10 sowie einen demgegenüber um das Drehgelenk 24 verschwenkbaren, mit dem Sitzteilträger 10 verbundenen Rücklehnträger 11 auf. Am vorderen Ende des Sitzteilträger 10 ist über das Drehgelenk 25 die in der Höhe bedarfsweise verstellbare Fußstütze 23 angebracht, die für das erfinderische Prinzip jedoch nicht zwingend erforderlich ist.

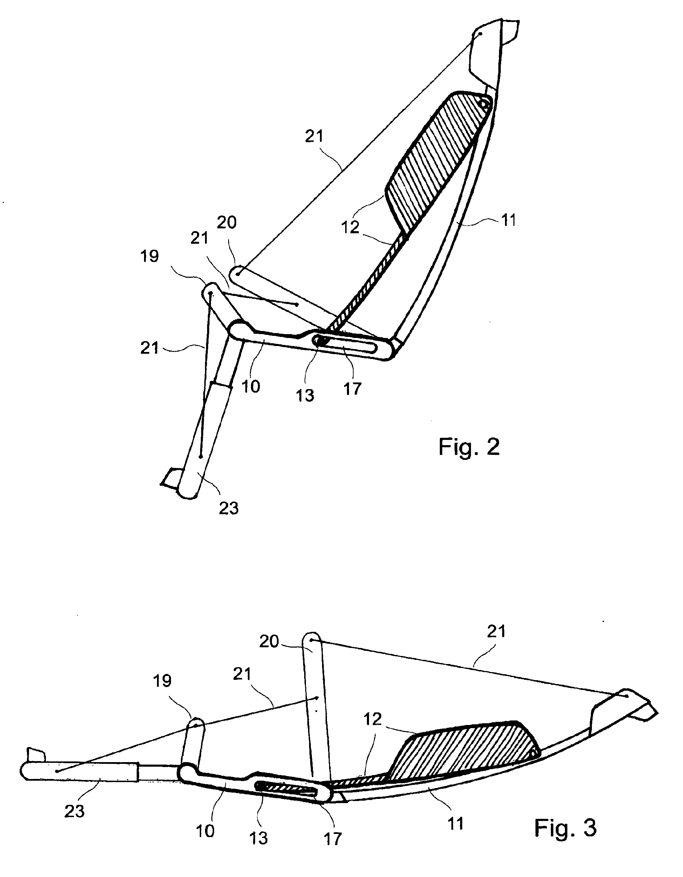

Bei einer Überführung des Sitzes aus der aufrechten Stellung gemäß Fig. 2 in die Liegeposition gemäß Fig. 3 wirken Fußstütze 23, Sitzteilträger 10 und Rückenlehnenträger 11 über einen Gelenkzug und Synchronhebel 19,20 miteinander zusammen. An den Synchronhebeln 19,20 ist dazu ein elastisches Element 21 befestigt, das die entsprechenden Bewegungen koordiniert und übersetzt. Dies ist aus der DE 10 2007 047 700 A1 bekannt.

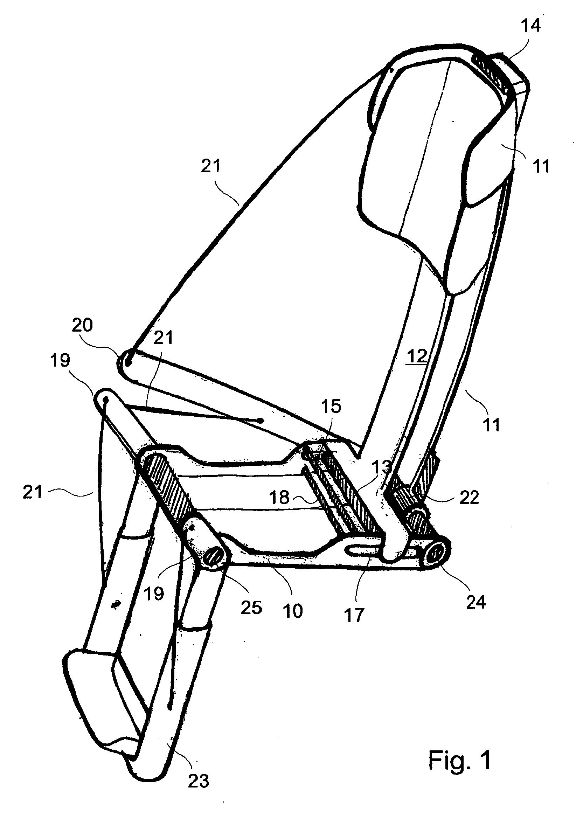

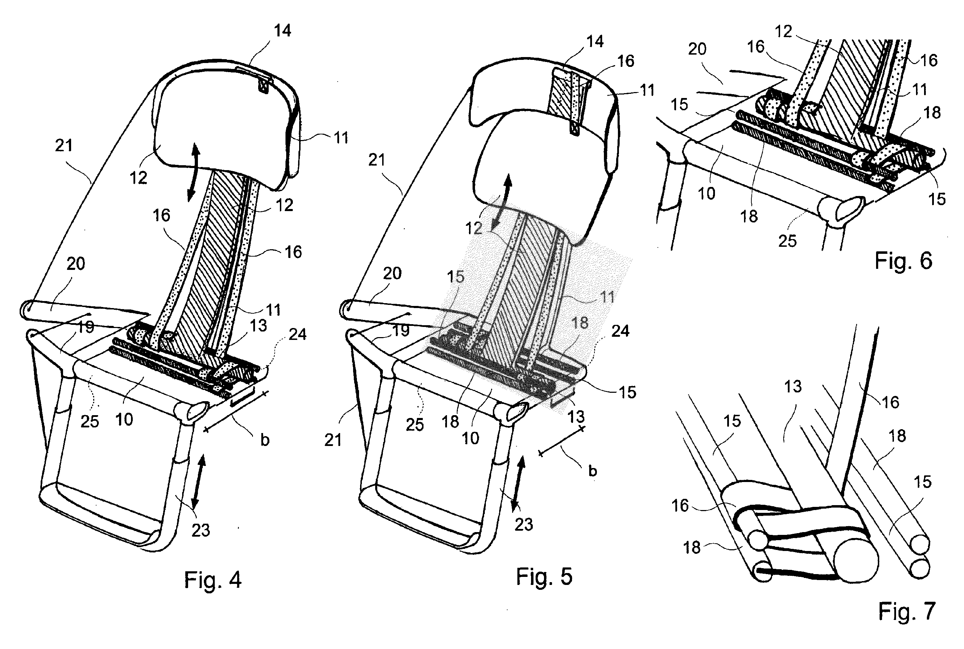

Um die Sitztiefe an die Bedürfnisse der auf dem Sitz sitzenden Person wie eines Kindes, eines Behinderten oder eines Erwachsenen anzupassen, ist eine Sitztiefenverstellung zur Verstellung der Sitztiefe b der Sitzfläche vorgesehen, auf die im Detail im Zusammenhang mit den Figuren 4 bis 7 noch näher eingegangen wird. Die Sitztiefenverstellung weist ein flaschenzugartig angeordnetes, über Umlenkmittel 13, eine obere Umlenkwelle 14 und weitere Umlenkwellen 15 umgelenktes Zugelement 16 auf, das an einem Rückenlehnenelement 12 angreift. Das Rückenlehnenelement 12 ist gemäß den Figuren 1 bis 3 in Schiebeführungen 17 am Sitzteilträger 10 geführt, wobei die Sitztiefenverstellung für die Bewegung des Rückenlehnenelements 12 in den Schiebeführungen 17 sorgt. Statt der beidseitigen Schiebeführung kann auch eine mittige Schiebführung vorgesehen sein. Das Rückenlehnenelement 12 ist damit am Rückenlehnenträger 11 und am Sitzteilträger 10 beweglich gelagert, insbesondere ist es am Rückenlehnenträger 11 in einer zeichnerisch nicht dargestellten Nut verschieblich und am Sitzteilträger 16 einerseits in der Schiebeführung 17 geführt wird und gleichzeitig um den jeweiligen Drehpunkt in der Schiebeführung drehbeweglich.

Das Umlenkmittel 13 für das Zugelement 16 des wenigstens einen Flaschenzugs ist dem Rückenlehnenelement 12 zugeordnet, vorzugsweise ist es mit dem Rückenlehnenelement einstückig. Die Kopfstütze mit ihren Flanken kann ebenfalls mit dem Rückenlehnenelement einstückig sein, es ist jedoch auch eine Ausführung denkbar, in der das Oberteil der Rückenlehne, d.h. die Kopfstütze gegenüber dem Rückenlehnenelement 12 verschieblich ist, um dadurch einen sicheren Halt für den Kopf des Kindes zu gewährleisten. Der Rückenlehnenträger 11 weist in seinem oberen Teil ebenfalls ein Element mit Flanken auf, die für die Ausgestaltung der Kopfstütze bestimmt sind und andererseits das Außenmaß der Rückenlehne bestimmen.

Das Rückenlehnenelement 12 weist einenends, nämlich an seinem unteren Ende, das Umlenkmittel 13 für das Zugelement 16 des Flaschenzuges auf. Anderenends, d.h. am oberen Ende, ist es mit dem Zugband 16 verbunden. Dies hat den Vorteil, dass das Zugelement 16 über eine definierte Länge am Rückenlehnenelement geführt ist, wie sich auch aus den Figuren 4 und 5 ergibt. Zu dieser definierten Länge tragen auch die Anordnungen der oberen Umlenkwelle 14 am Rückenlehnenelement 12 der Fixierungen 18 und der Umlenkwellen 15 im Sitzteilträger 10 bei, da es dadurch möglich ist, das bandartige Zugelement 16 unter Zug zu halten, wodurch eine sichere Betätigung und dauerhafte Nutzung des Flaschenzuges gewährleistet ist.

Das Umlenkmittel 13 befindet sich etwa in einer Ebene mit den Schiebeführungen 17 für die drehverschiebliche Lagerung des Rückenlehnenelements 12 am Sitzteilträger 10. Vorzugsweise ist es selbst das Führungselement, das in den Schiebeführungen 17 geführt ist. Die Führung des Zugelementes 16 des Flaschenzuges wird insbesondere aus den Figuren 4 bis 7 ersichtlich. Im Bereich der Enden der Schiebeführungen 17 für die drehverschiebliche Lagerung des Rückenlehnenelements 12 am Sitzteilträger 10 befindet sich jeweils eine Fixierung 18 zur Fixierung der Enden des Zugelements 16. Von dieser Fixierung ausgehend kann das Zugelement 16 grundsätzlich zum Umlenkelement 13 geführt werden, gelangt von dem in der Höhe des Sitzteilträgers 10 befindlichen Umlenkelement 13 dann zur oberen Umlenkwelle 14 und von dort zurück zum Umlenkmittel 13, um dann auf der in Fig. 4 und 5 hinteren Seite wieder zur Fixierung 18 geführt zu werden. Da jedoch üblicherweise eine Längenübersetzung erforderlich ist, wird das Zugelement vom Umlenkmittel 13 zunächst zur Umlenkwelle 15 und dann wieder zum Umlenkelement 13 geführt, bevor es zur oberen Umlenkwelle 14 gelangt. Das Zugelement 16 erstreckt sich damit vom Umlenkmittel 13 etwa parallel zur Ebene der Sitzfläche und in etwa in der Ebene der Schiebeführung 17 nach vorn und nach hinten jeweils zu den Fixierungen 18 bzw. zu den Umlenkwellen 15. Vorzugsweise wird das Zugelement 16, wie in den Figuren 4 und 6 gezeigt, mit seinen Enden jeweils um dasselbe unten am Rückenlehnenträger 12 angeordnete Umlenkmittel 13 zu den Fixierungen 18 am Sitzteilträger 10 geführt.

Die Festlegung der Einstellung zwischen Rückenlehnenträger 11 und Sitzteilträger 10 erfolgt mit Hilfe der Verrastung 22, von der in Figur 1 lediglich das Zahnrad zu erkennen ist. Diese verhältnismäßig großen Rasterräder greifen in entsprechende Verrastungen ein und können über ein Arretierblech verriegelt werden. Ein Lösen der Arretierung und damit eine Verstellung kann über einen Bowdenzug erfolgen.

Die Einbindung des Flaschenzugs in die Verstellung der Sitztiefe hat zusammen mit der verschieblichen Lagerung des oberen Endes des Rückenlehnenelements 12 am Rückenlehnenträger 11 den Vorteil, dass die Sitztiefenverstellung in der Stellung verbleiben kann, in der sie sich befindet, auch wenn der Sitz zusammengeklappt wird. Es findet dann je nach Bedarf lediglich eine Relativverschiebung von Rückenlehnenelement 12 und Rückenlehnenträger 11 statt. Auch der Bowdenzug selbst ist durch seine Lagerung an den Umlenkmitteln und Umlenkwellen in der Lage, einer derartige Bewegung problemlos mitzumachen, da die wichtigen Anlenkpunkte geometrisch bestimmt sind, so dass sich lediglich eine Verlagerung im Flaschenzug ergibt, ohne das eine Verstellung erfolgt.

### Bezugszeichenliste

- 10: Sitzteilträger
- 11: Rückenlehnenträger
- 12: Rückenlehnenelement
- 13: Umlenkmittel
- 14: obere Umlenkwelle
- 15: Umlenkwelle
- 16: Zugelement
- 17: Schiebeführung
- 18: Fixierung
- 19, 20: Synchronhebel
- 21: elastisches Element
- 22: Verrastung
- 23: Fußstütze
- 24, 25: Drehgelenk
- b: Sitztiefe

## Patentansprüche

1. Sitz für einen Schiebewagen, Stuhl oder Kinderwagen mit
- einem Sitzteilträger (10) für eine Sitzfläche,
- einem verschwenkbaren, mit dem Sitzteilträger (10) verbundenen Rückenlehnenträger (11),
- einer Sitztiefenverstellung zur Verstellung der Sitztiefe (b) der Sitzfläche mit einem flaschenzugartig angeordneten, über Umlenkmittel (13) umgelenkten Zugelement (16), das an einem Rückenlehnenelement (12) für die Rückenlehne angreift,
**dadurch gekennzeichnet, dass** das vom Zugelement (16) gesondert vorgesehene Rückenlehnenelement (12) am Rückenlehnenträger (11) und am Sitzteilträger (10) beweglich gelagert ist und dass dem Rückenlehnenelement (12) ein Umlenkmittel (13) für den wenigstens einen Flaschenzug des Zugelements (16) zugeordnet ist.

2. Sitz nach Anspruch 1, **dadurch gekennzeichnet, dass** das Rückenlehnenelement (12) verschieblich am Rückenlehnenträger (11) und drehverschieblich am Sitzteilträger (10) gelagert ist.

3. Sitz nach Anspruch 1 oder 2, **dadurch gekennzeichnet, dass** das Rückenlehnenelement (12) einenends ein Umlenkmittel (13) für das Zugelement (16) des Flaschenzugs aufweist und anderenends mit dem Zugelement (16) verbunden ist.

4. Sitz nach einem der vorhergehenden Ansprüche, **dadurch gekennzeichnet, dass** das dem Rückenlehnenelement (12) zugeordnete Umlenkmittel (13) etwa in einer Ebene mit einer Schiebeführung (17) für die drehverschiebliche Lagerung des Rückenlehnenelements (12) am Sitzteilträger (10) angeordnet ist.

5. Sitz nach Anspruch 4, **dadurch gekennzeichnet, dass** das Umlenkmittel (13) in den Schiebeführungen zur Lagerung des Rückenlehnenelements (12) am Sitzteilträger (10) geführt ist.

6. Sitz nach einem der beiden vorhergehenden Ansprüche, **dadurch gekennzeichnet, dass** im Bereich von Enden der Schiebeführungen (17) für die drehbewegliche Lagerung des Rückenlehnenelements (12) am Sitzteilträger (10) jeweils eine Fixierung (18) für die Enden des bandartigen Zugelements (16) des Flaschenzugs vorgesehen sind.

7. Sitz nach einem der vorhergehenden Ansprüche, **dadurch gekennzeichnet, dass** sich das Zugelement (16) des Flaschenzugs von dem dem Rücklehnenelement (12) zugeordneten Umlenkmittel (13) etwa parallel zur Ebene der Sitzfläche nach vorne und nach hinten zu je einer Fixierung (18) erstreckt.

8. Sitz nach Anspruch 6 oder 7, **dadurch gekennzeichnet, dass** der Flaschenzug als doppelter Flaschenzug ausgebildet ist und dass das Zugelement (16) mit seinen Enden jeweils um dasselbe, unten am Rückenlehnenelement (12) angeordnete Umlenkmittel (13) zu den am Sitzteilträger (10) angeordneten Fixierungen (18) geführt ist.

9. Sitz nach einem der Ansprüche 6 bis 8, **dadurch gekennzeichnet, dass** im Bereich der Fixierungen (18) jeweils eine Umlenkwelle (15) für das Zugelement (16) des Flaschenzugs vorgesehen ist.

10. Sitz nach einem der vorhergehenden Ansprüche, **dadurch gekennzeichnet, dass** am oberen Ende des Rückenlehnenträgers (11) eine obere Umlenkwelle (14) für das Zugelement (16) des Flaschenzugs vorgesehen ist.

## Claims

1. A seat for a pushchair, chair or buggy, having
- a seat part support (10) for a seat surface,
- a pivotal backrest support (11) that is connected to the seat part support (10),
- a seat depth adjustment for adjusting the seat depth (b) of the seat surface, having a pull element (16) that is arranged in the manner of a pulley system and is deflected over deflection means (13) and acts on a backrest element (12) for the backrest,
**characterised in that** the backrest element (12), which is provided separately from the pull element (16), is movably mounted on the backrest support (11) and the seat part support (10), and **in that** a deflection means (13) for the at least one pulley of the pull element (16) is associated with the backrest element (12).

2. A seat according to Claim 1, **characterised in that** the backrest element (12) is displaceably mounted on the backrest support (11) and rotationally displaceable on the seat part support (10).

3. A seat according to Claim 1 or 2, **characterised in that** the backrest element (12) has at one end a deflection means (13) for the pull element (16) of the pulley system and at the other end is connected to the pull element (16).

4. A seat according to one of the preceding claims, **characterised in that** the deflection means (13) associated with the backrest element (12) is arranged approximately in the same plane as a sliding guide (17) for rotationally displaceably mounting the backrest element (12) on the seat part support (10).

5. A seat according to Claim 4, **characterised in that** the deflection means (13) is guided in the sliding guides (17) for mounting the backrest element (12) on the seat part support (10).

6. A seat according to one of the two preceding claims, **characterised in that** in the region of ends of the sliding guides (17) for rotationally displaceably mounting the backrest element (12) on the seat part support (10) there is in each case provided a fixing member (18) for the ends of the web-like pull element (16) of the pulley system.

7. A seat according to one of the preceding claims, **characterised in that** the pull element (16) of the pulley system extends, from the deflection means (13) that is associated with the backrest element (12) approximately parallel to the plane of the seat surface, forward and backward to a respective fixing member (18).

8. A seat according to Claim 6 or 7, **characterised in that** the pulley system takes the form of a double pulley system, and **in that** the pull element (16) is guided, with its ends in each case around the same deflection means (13) arranged at the bottom of the backrest support (12), to the fixing members (18) arranged on the seat part support (10).

9. A seat according to one of Claims 6 to 8, **characterised in that** in the region of the fixing members (18) there is provided a respective deflection shaft (15) for the pull element (16) of the pulley system.

10. A seat according to one of the preceding claims, **characterised in that** at the upper end of the backrest support (11) there is provided an upper deflection shaft (14) for the pull element (16) of the pulley system.

## Revendications

1. Siège pour chariot, chaise ou poussette, comportant
- un support partiel de siège (10) pour une surface de siège,
- un support de dossier (11) pivotant relié au support partiel de siège (10),
- un réglage de profondeur de siège pour le réglage de la profondeur de siège (b) de la surface de siège, comportant un élément de tirage (16) disposé à la manière d'un treuil, dévié par un moyen de déviation (13) et qui vient en prise avec un élément de dossier (12) pour le dossier,
**caractérisé en ce que** l'élément de dossier (12) prévu séparément de l'élément de tirage (16) est connecté de manière déplaçable au support de dossier (11) et au support partiel de siège (10) et **en ce qu'**un moyen de déviation (13) est associé à l'élément de dossier (12) pour la ou les treuils de l'élément de tirage (16).

2. Siège selon la revendication 1, **caractérisé en ce que** l'élément de dossier (12) est connecté de manière déplaçable au support de dossier (11) et de manière pivotante au support partiel de siège (10).

3. Siège selon la revendication 1 ou 2, **caractérisé en ce que** l'élément de dossier (12) comporte à une extrémité un moyen de déviation (13) pour l'élément de tirage (16) du treuil et est relié à une autre extrémité à l'élément de tirage (16).

4. Siège selon l'une des revendications précédentes, **caractérisé en ce que** le moyen de déviation (13) associé à l'élément de dossier (12) est disposé à peu près dans un plan avec une glissière de déplacement (17) pour la connexion pivotante de l'élément de dossier (12) au support partiel de siège (10).

5. Siège selon la revendication 4, **caractérisé en ce que** le moyen de déviation (13) est guidé dans les glissières de déplacement pour la connexion de l'élément de dossier (12) au support partiel de siège (10).

6. Siège selon l'une des deux revendications précédentes, **caractérisé en ce que** dans la zone des extrémités des glissières de déplacement (17) pour la connexion pivotante de l'élément de dossier (12) au support partiel de siège (10), il est prévu une fixation (18) pour chacune des extrémités de l'élément de tirage en forme de bande (16) du treuil.

7. Siège selon l'une des revendications précédentes, **caractérisé en ce que** l'élément de tirage (16) du treuil s'étend du moyen de déviation (13) associé à l'élément de dossier (12) à peu près parallèlement au plan de la surface de siège vers l'avant et vers l'arrière à chaque fois jusqu'à une fixation (18).

8. Siège selon la revendication 6 ou 7, **caractérisé en ce que** le treuil est conçu sous la forme d'un double treuil et **en ce que** l'élément de tirage (16) est guidé, avec ses extrémités respectives autour du même moyen de déviation (13) disposé sous l'élément de dossier (12), vers les fixations (18) disposées au niveau du support partiel de siège (10).

9. Siège selon l'une des revendications 6 à 8, **caractérisé en ce que** dans la zone des fixations (18), il est prévu à chaque fois un arbre de déviation (15) pour l'élément de tirage (16) du treuil.

10. Siège selon l'une des revendications précédentes, **caractérisé en ce qu'**il est prévu à l'extrémité supérieure du support de dossier (11) un arbre de déviation supérieur (14) pour l'élément de tirage (16) du treuil.
